# FASCICULE DE BREVET EUROPEEN

(11) **EP 2 642 317 B1**
(45) Date de publication et mention de la délivrance du brevet: **06.05.2020**
(21) Numéro de dépôt: 13160297.1
(22) Date de dépôt: 21.03.2013
(51) Int. Cl.: G01S 19/14, G01S 19/35, G01S 19/24

(54) **Dispositif de réception de signaux de radio-navigation multi-antennes**
Empfangsvorrichtung für Funknavigationssignale mit Mehrfachantennen
Device for receiving radio-navigation signals with multiple antennas

(30) Priorité: 22.03.2012 FR 1200854
(43) Date de publication de la demande: 25.09.2013
(73) Titulaire: Thales, 92400 Courbevoie (FR)
(72) Inventeur: Martin, Nicolas, 26500 Bourg les Valence (FR); Chopard, Vincent, 07300 Tournon sur Rhône (FR); Depraz, David, 26000 Valence (FR)
(74) Mandataire: Hammes, Pierre

(56) Documents cités:
- GB-B- 2 367 199
- US-A1- 2002 044 085
- US-A1- 2009 135 060
- PATRICK C. FENTON ET AL: "Using GPS For Position& Attitude Determination Of The Canadian Space Agency's Active Rocket Mission", PROC. OF ION GPS 98, 15 septembre 1998 (1998-09-15), pages 1791-1800, XP055054247, Nashville, TN, USA

## Description

La présente invention a pour objet un dispositif de réception de signaux de radio-navigation multi-antennes.

Le domaine de l'invention est celui des systèmes de radio-navigation par satellite connus sous l'acronyme systèmes GNSS (« Global Navigation Satellite System ») tels que les systèmes GPS ou GALILEO.

Plus précisément, l'invention concerne les récepteurs de signaux de radio-navigation comportant plusieurs antennes réceptrices.

Un récepteur GNSS peut être utilisé sur tout type de véhicule pour déterminer des informations sur sa position, sa vitesse et de façon générale fournir une aide au déplacement ou à la navigation.

En particulier, un tel récepteur peut être utilisé sur un lanceur spatial. L'utilisation d'un récepteur mono-antenne dans un tel cas d'application pose problème car la position verticale du fuselage de l'engin engendre un masquage d'une partie des satellites en vue par le corps du lanceur pour les antennes. Les signaux transmis par ces satellites ne seront alors pas reçus ou reçus avec une forte atténuation par le récepteur. De façon plus générale, le positionnement d'une antenne sur le corps d'un porteur de grande envergure pose le problème du masquage de tout ou partie des signaux de radio-navigation émis par les satellites en vue du porteur par le porteur lui-même.

Une solution permettant de résoudre le problème du masquage des signaux consiste à utiliser une antenne annulaire disposée sur la circonférence du fuselage du porteur. De cette façon, le signal émis par un satellite est en permanence reçu par au moins une partie de l'antenne. Cependant, ce type d'antennes ne permet pas d'atteindre des performances satisfaisantes car elle produit une seule sortie de signal qui est construite de façon non optimale et qui engendre des pertes importantes en rapport signal à bruit.

On connait par ailleurs la technique décrite dans le document: PATRICK C. FENTON ET AL: "Using GPS For Position& Attitude Détermination Of The Canadian Space Agency's Active Rocket Mission", PROC. OF ION GPS 98.

On connait également une autre solution décrite dans la demande de brevet américaine US 2010/328155 mais cette solution ne permett pas de prendre en compte l'impact d'une perte de signal temporaire sur une ou plusieurs antennes du réseau.

L'invention permet de résoudre le problème précité en proposant une solution qui améliore les performances par rapport aux récepteurs connus. L'invention consiste à utiliser une pluralité d'antennes disposées sur la circonférence du fuselage de l'engin et à démoduler les signaux reçus par chaque antenne séparément. La diversité des chaînes de démodulation est exploitée pour compenser la perte de signal sur une des chaînes lorsque l'antenne correspondante subit une perte de signal due au masquage du satellite par le porteur.

L'invention a pour objet un dispositif de réception de signaux de radio-navigation par satellite comprenant une pluralité d'antennes réceptrices formant un réseau antennaire, pour chaque antenne et pour chaque satellite en vue dudit dispositif, une chaîne de réception comprenant des moyens de démodulation des signaux reçus, une boucle de code et une boucle de porteuse, lesdits moyens de démodulation comprenant des moyens de multiplication en phase avec une porteuse locale, des moyens de corrélation en temps avec un code local et des moyens d'intégration du signal corrélé en phase et en temps, la boucle de porteuse comprenant un discriminateur de phase, un correcteur de boucle de porteuse et un opérateur de contrôle numérique NCO apte à délivrer une phase de porteuse locale, la boucle de code comprenant un discriminateur de code, un correcteur de boucle et un opérateur de contrôle numérique NCO apte à délivrer une mesure de l'instant d'émission par le satellite du signal reçu,caractérisé en ce que :
- chaque chaîne de réception dudit dispositif comporte en outre des moyens d'interconnexion adaptés à basculer simultanément les entrées de l'opérateur de contrôle numérique NCO de la boucle de porteuse et de l'opérateur de contrôle numérique NCO de la boucle de code d'une première chaîne de réception vers les sorties du correcteur de boucle de porteuse et du correcteur de boucle de code d'une seconde chaîne de réception lorsque le signal transmis par le satellite n'est plus reçu par l'antenne de la première chaîne de réception de sorte que la première chaîne de réception opère en boucle ouverte,
- ledit dispositif comporte en outre des moyens de sélection de la mesure, qui est dérivée de la mesure de l'instant d'émission par le satellite du signal reçu, parmi celles délivrées par chaque chaîne de réception opérant en boucle fermée, qui présente le rapport signal à bruit le plus élevé ou qui est issue de la chaîne de traitement qui présente le gain d'antenne en réception le plus élevé.

Selon un aspect particulier de l'invention, les antennes réceptrices sont positionnées sur la circonférence d'un porteur de forme sensiblement cylindrique.

Selon un autre aspect particulier de l'invention, la perte de signal sur une antenne due au masquage du signal par le corps du porteur est anticipée en fonction des positions respectives du porteur, des antennes et des satellites.

Dans une variante de réalisation, le dispositif selon l'invention comporte en outre, pour chaque chaîne de réception, un correcteur du bras de levier qui consiste à compenser chaque mesure de l'instant d'émission par le satellite du signal reçu par la différence de chemin optique ΔL_{BL} entre le centre de phase de l'antenne et le centre de symétrie O du réseau antennaire.

Dans une variante de réalisation de l'invention, chaque chaîne de réception comporte en outre, pour la boucle de code et la boucle de porteuse, un correcteur du bras de levier en vitesse qui consiste à compenser les sorties des correcteurs de boucle par la dérivée temporelle de la différence de chemin optique ΔL_{BL}.

Dans une variante de réalisation de l'invention, la différence de chemin optique ΔL_{BL} est déterminée en projetant le bras de levier r sur l'axe à vue entre le centre de symétrie O du réseau antennaire et le satellite.

Dans une variante de réalisation de l'invention, les coordonnées du bras de levier r sont déterminées, dans un repère spatial fixe par rapport à la terre, à partir d'une mesure de l'attitude du porteur.

D'autres caractéristiques et avantages de la présente invention apparaîtront mieux à la lecture de la description qui suit en relation avec les dessins annexés qui représentent:
- La figure 1a, un schéma en vue de dessus et en coupe transversale de la disposition des antennes d'un récepteur selon l'invention sur le corps d'un porteur de type lanceur spatial, dans un mode de réalisation comprenant deux antennes uniquement,
- La figure 1b, une illustration du problème du masquage d'un satellite par le corps du porteur,
- La figure 2, un schéma de l'architecture fonctionnelle d'un récepteur selon l'invention comprenant deux antennes.

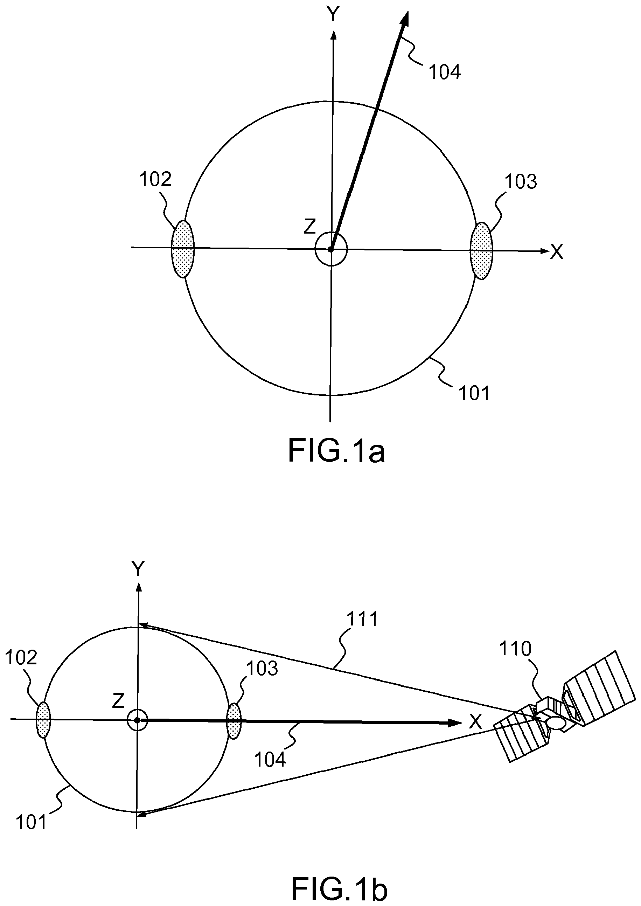

La figure 1a, schématise, en vue de dessus et en coupe transversale, un porteur 101 de forme sensiblement cylindrique avec deux antennes 102, 103 réceptrices positionnées sur la circonférence du corps du porteur, par exemple de façon équiréparties. L'axe 104 représente l'axe à vue entre le récepteur GNSS selon l'invention, positionné sur le porteur 101, et un satellite de radio-navigation. L'axe 104 correspond à la direction de réception du signal de radio-navigation émis par un satellite. Selon l'orientation de l'axe à vue 104, le signal reçu par une antenne 102, 103 peut être partiellement ou totalement masqué par le corps du porteur 101.

La figure 1a représente un exemple de réalisation du récepteur selon l'invention comprenant deux antennes mais un nombre d'antennes quelconque, supérieur ou égal à deux, est également envisageable. Les antennes sont disposées préférentiellement sur la circonférence du porteur de façon équirépartie. Plus généralement les antennes sont agencées sur le corps du porteur de sorte qu'à chaque instant, au moins un satellite doit être en vue d'au moins une antenne sans que la totalité des signaux reçus soient masqués par le corps du porteur.

La figure 1b illustre un cas de masquage d'un signal de radionavigation 111 émis par un satellite 110. Le signal 111 est correctement reçu par l'antenne 103 disposée en vue du satellite mais n'est pas reçu par la seconde antenne 102 car masqué par le porteur 101.

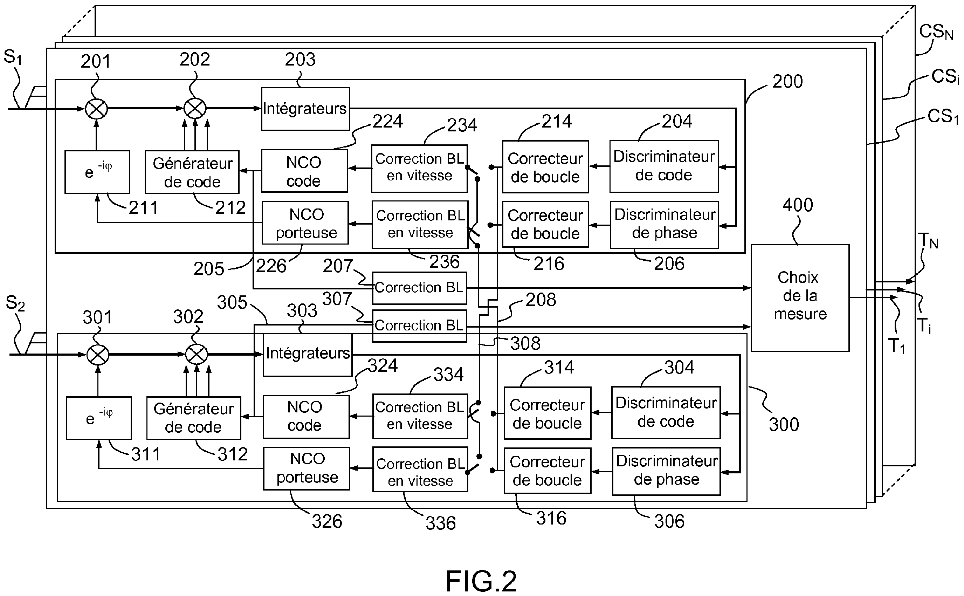

La figure 2 illustre sur un schéma l'architecture fonctionnelle d'un récepteur de signaux de radio-navigation selon l'invention comportant deux antennes (non représentées).

Un tel récepteur comporte plusieurs voies de réception CS₁, CSᵢ, ..., CS_{N} pour chaque canal satellite, N étant égal au nombre de satellites de radio-navigation en vue du récepteur.

On décrit à présent les traitements mis en œuvre pour une voie de réception CS₁, ces traitements sont dupliqués pour chacune des autres voies de réception.

Une voie de réception 200, 300 est appliquée pour chaque signal S₁, S₂ reçu par chacune des deux antennes. Le signal reçu S₁, S₂ est démodulé en phase par multiplication 201, 301 avec une porteuse locale 211, 311 et est désétalé par corrélation 202, 302 avec un code local 212, 312.

La porteuse locale 211,311 et le code local 212,312 sont générés localement.

Le signal démodulé et désétalé est ensuite intégré par des moyens d'intégration cohérente 203, 303. L'ensemble constitué du multiplieur en phase 201,301.du multiplieur en code 202,302 et des moyens d'intégration 203,303 réalise une corrélation en phase et code du signal reçu avec la porteuse locale et le code local.

Pour synchroniser le code local et la porteuse locale sur le signal de radio-navigation émis par le satellite et reçu par l'antenne, le récepteur utilise en parallèle deux dispositifs de poursuite qui sont une boucle de code et une boucle de porteuse.

La boucle de code sert à positionner un code local en phase avec le code contenu dans le signal satellite S₁, S₂ reçu de manière à réaliser une corrélation donnant le maximum d'énergie.

La boucle de porteuse sert à asservir la fréquence ou la phase de la porteuse locale avec respectivement la fréquence ou la phase de la porteuse reçue, afin de maximiser le résultat de la corrélation.

La présence d'un signal en sortie d'intégration 203, 303 avec une amplitude importante, c'est-à-dire nettement supérieure à ce que donnerait le bruit ambiant en l'absence de signal reçu signifie que le code local et la porteuse locale sont synchronisés sur le signal reçu, ce qui permet de mesurer à chaque instant l'instant d'émission et la fréquence Doppler du signal reçu, par l'intermédiaire de la phase du code local et de la vitesse de la phase de la porteuse locale.

La boucle de code comprend un discriminateur de code 204, 304 qui délivre, à partir du signal corrélé intégré, une information sur le décalage temporel entre le code du signal reçu et le code local, un filtre correcteur de boucle 214, 314 qui produit, à partir de la sortie du discriminateur de code 204, 304 une correction en vitesse et un opérateur de contrôle numérique 224, 324, encore appelé NCO, qui transforme la commande en vitesse en une commande en temps qui vient piloter la génération du code local 212, 312. A partir de la commande en temps fournie en sortie de l'opérateur de contrôle numérique 224, 324, une estimée 205, 305 de l'instant d'émission du signal par le satellite est produite.

La boucle de porteuse sert à asservir la phase de la porteuse locale sur la phase de la porteuse reçue à modulo 2π près dans le but d'améliorer la précision de la mesure de code grâce à un lissage du code par la phase de la porteuse.

Une boucle de porteuse, encore appelée en terminologie anglo-saxonne PLL, signifiant Phase Lock Loop ou boucle à verrouillage de phase, utilise la voie de corrélation ponctuelle et asservit la phase de la porteuse locale sur la phase de la porteuse reçue par une rétro-action sur la phase locale. La boucle de porteuse comprend un discriminateur de phase 206, 306 qui mesure l'écart entre la phase locale et la phase reçue, un correcteur de boucle 216, 316 qui filtre la sortie du discriminateur de phase 206, 306 et produit une correction en vitesse, un opérateur de contrôle numérique NCO porteuse 226, 326 qui transforme la commande en vitesse en une phase de porteuse locale qui vient piloter le générateur de porteuse 211,311.

Sans sortir du cadre de l'invention, la boucle de porteuse peut également être réalisée par une boucle à verrouillage de fréquence.

Dans une variante de réalisation de l'invention, chaque voie de démodulation mono-antenne comprend en outre une correction du bras de levier 207, 307 entre le centre de symétrie O du réseau antennaire et le centre de phase de l'antenne. Les coordonnées du bras de levier r sont calculées dans un repère spatial fixe par rapport à la terre, tel le repère connu ECEF (« Earth Centred Earth Fixed »). Les coordonnées des antennes dans un repère ECEF sont obtenues grâce à une matrice de changement de repère fournie soit par un système de détermination de l'attitude du porteur externe à l'invention soit par un traitement de détermination d'attitude réalisé directement à partir des mesures des signaux reçus sur les différentes antennes.

Le bras de levier r obtenu est ensuite projeté sur l'axe à vue 104 pour obtenir la différence de chemin optique ΔL_{BL} entre le centre de symétrie O du réseau antennaire et le centre de phase de l'antenne. La correction du bras de levier 207, 307 consiste à compenser la mesure temporelle 205, 305 fournie par chaque chaîne de réception 200, 300 par cette différence de chemin optique AL_{BL}.

La correction du bras de levier sur les mesures issues de chaque antenne permet de les rendre comparables en corrigeant le décalage temporel induit par la distance entre chaque antenne. Les estimées temporelles 205, 305 sont ensuite transmises à un module de décision 400 qui sélectionne l'estimée T₁, parmi celles disponibles, qui correspond au meilleur rapport signal à bruit du signal reçu ou au meilleur gain d'antenne en réception.

Dans une autre variante de réalisation de l'invention, la boucle de code et la boucle de porteuse comprennent en outre chacune un correcteur de bras de levier en vitesse 234, 236, 334, 336. La correction du bras de levier en vitesse consiste à calculer la dérivée de la différence de chemin optique AL_{BL} par rapport au temps et à compenser les sorties des correcteurs de boucle de code 214, 314 et des correcteurs de boucle de porteuse 216, 316 par cette dérivée.

On décrit à présent plus en détail le fonctionnement du récepteur selon l'invention.

Lorsque le signal satellite S₁, S₂ est reçu par les deux antennes, chaque voie de démodulation est mise en œuvre indépendamment et fournit une mesure indépendante 205, 305 de l'instant d'émission du signal par le satellite. Un choix est ensuite fait par un module de décision 400.

Lorsqu'une antenne ne reçoit plus de signal en provenance d'un satellite, car l'axe à vue entre cette antenne et le satellite est masqué par le corps du porteur 101, le fonctionnement des boucles de code et de porteuse s'en trouve affecté car il y a risque de décrochage des boucles. Pour éviter ce problème, l'invention consiste à basculer la voie de réception affectée d'une perte de signal en boucle ouverte et à piloter les NCO code et porteuse par les corrections en vitesse de code et de porteuse fournies par la voie de réception d'une autre antenne. Lorsque le signal est à nouveau reçu par l'antenne, on repasse en boucle fermée et ainsi le signal est raccroché directement sans induire de discontinuités dans le fonctionnement des boucles. La mesure temporelle 205, 305 fournie par la voie de réception fonctionnant en boucle ouverte est exclue du choix opéré par le module de décision 400.

Le principe décrit ci-dessus est illustré sur la figure 2 par les connecteurs 208, 308 qui permettent de relier les sorties des correcteurs de boucle d'une chaîne aux entrées des correcteurs de bras de levier en vitesse d'une autre chaîne ou directement aux entrées des NCO code et porteuse lorsque les bras de levier ne sont pas corrigés.

Les coordonnées du porteur en repère terrestre ainsi que les positions des satellites sont supposées connues, ainsi il est possible d'anticiper une perte de signal en provenance d'un satellite sur une antenne donnée si l'axe à vue associé est masqué par le porteur et ainsi déterminer au préalable l'instant de basculement d'une voie de réception en boucle ouverte ou en boucle fermée.

L'invention s'étend aux récepteurs comportant plus de deux antennes.

## Revendications

1. Dispositif de réception de signaux de radio-navigation par satellite comprenant une pluralité d'antennes réceptrices formant un réseau antennaire, pour chaque antenne et pour chaque satellite en vue dudit dispositif, une chaîne de réception (200,300) comprenant des moyens de démodulation des signaux reçus (S₁,S₂), une boucle de code et une boucle de porteuse, lesdits moyens de démodulation comprenant des moyens de multiplication (201,301) en phase avec une porteuse locale (211,311), des moyens de corrélation en temps (202,302) avec un code local (212,312) et des moyens d'intégration (203,303) du signal corrélé en phase et en temps, la boucle de porteuse comprenant un discriminateur de phase (206,306), un correcteur de boucle (216,316) de porteuse et un opérateur de contrôle numérique NCO (226,326) apte à délivrer une phase de porteuse locale, la boucle de code comprenant un discriminateur de code (204,304), un correcteur de boucle (214,314) et un opérateur de contrôle numérique NCO (224,324) apte à délivrer une mesure (205,305) de l'instant d'émission par le satellite du signal reçu (S₁,S₂),
**caractérisé en ce que** :
- chaque chaîne de réception (200,300) dudit dispositif comporte en outre des moyens d'interconnexion (208,308) adaptés à basculer simultanément les entrées de l'opérateur de contrôle numérique NCO (226) de la boucle de porteuse et de l'opérateur de contrôle numérique NCO (224) de la boucle de code d'une première chaîne de réception (200) vers les sorties du correcteur de boucle de porteuse (316) et du correcteur de boucle de code (314) d'une seconde chaîne de réception (300) lorsque le signal (S₁) transmis par le satellite n'est plus reçu par l'antenne de la première chaîne de réception (200) de sorte que la première chaîne de réception (200) opère en boucle ouverte,
- ledit dispositif comporte en outre des moyens (400) de sélection de la mesure (T₁), qui est dérivée de ladite mesure (205, 305) de l'instant d'émission par le satellite du signal reçu (S1, S2), parmi celles (205,305) délivrées par chaque chaîne de réception (200,300) opérant en boucle fermée, qui présente le rapport signal à bruit le plus élevé ou qui est issue de la chaîne de traitement qui présente le gain d'antenne en réception le plus élevé.

2. Dispositif de réception de signaux de radio-navigation selon la revendication 1 **caractérisé en ce que** les antennes réceptrices sont positionnées sur la circonférence d'un porteur de forme sensiblement cylindrique.

3. Dispositif de réception de signaux de radio-navigation selon l'une des revendications précédentes **caractérisé en ce que** la perte de signal sur une antenne due au masquage du signal par le corps du porteur est anticipée en fonction des positions respectives du porteur, des antennes et des satellites.

4. Dispositif de réception de signaux de radio-navigation selon l'une des revendications 1 à 3 comportant en outre, pour chaque chaîne de réception (200,300), un correcteur du bras de levier (207,307) qui consiste à compenser chaque mesure (205,305) de l'instant d'émission par le satellite du signal reçu (S₁,S₂) par la différence de chemin optique ΔL_{BL} entre le centre de phase de l'antenne et le centre de symétrie O du réseau antennaire.

5. Dispositif de réception de signaux de radio-navigation selon l'une des revendications 1 à 4 **caractérisé en ce que** chaque chaîne de réception comporte en outre, pour la boucle de code et la boucle de porteuse, un correcteur du bras de levier en vitesse (234,236,334,336) qui consiste à compenser les sorties des correcteurs de boucle (214,216,314,316) par la dérivée temporelle de la différence de chemin optique ΔL_{BL}.

6. Dispositif de réception de signaux de radio-navigation selon l'une des revendications 4 ou 5 **caractérisé en ce que** la différence de chemin optique AL_{BL} est déterminée en projetant le bras de levier r sur l'axe à vue (104) entre le centre de symétrie O du réseau antennaire et le satellite.

7. Dispositif de réception de signaux de radio-navigation selon la revendication 6 **caractérisé en ce que** les coordonnées du bras de levier r sont déterminées, dans un repère spatial fixe par rapport à la terre, à partir d'une mesure de l'attitude du porteur.

## Patentansprüche

1. Vorrichtung zum Empfangen von Satellitenfunknavigationssignalen, umfassend eine Mehrzahl von Empfangsantennen, die eine Antennenanordnung bilden, für jede Antenne und für jeden Satelliten in der Sicht der Vorrichtung, eine Empfangskette (200, 300), die Mittel zum Demodulieren der empfangenen Signale (S₁, S₂) umfasst, eine Codeschleife und eine Trägerschleife, wobei die Demodulationsmittel Folgendes umfassen: Vervielfachungsmittel (201, 301) phasengleich mit einem lokalen Träger (211, 311), Zeitkorrelationsmittel (202, 302) mit einem lokalen Code (212, 312) und Mittel (203, 303) zum Integrieren des phasen- und zeitkorrelierten Signals, wobei die Trägerschleife einen Phasendiskriminator (206, 306), einen Trägerschleifenkorrektor (216, 316) und ein digitales Steuergerät NCO (226, 326), das fähig ist, einer lokalen Trägerphase zu liefern, wobei die Codeschleife einen Codediskriminator (204, 304), einen Schleifenkorrektor (214, 314) und ein digitales Steuergerät NCO (224, 324) umfasst, das fähig ist, einen Messwert (205, 305) des Sendezeitpunkts des empfangenen Signals (S₁, S₂) durch den Satelliten zu liefern,
**dadurch gekennzeichnet, dass**:
- jede Empfangskette (200, 300) der Vorrichtung ferner Verbindungsmittel (208, 308) umfasst, die die Eingänge des digitalen Steuergeräts NCO (226) der Trägerschleife und des digitalen Steuergeräts NCO (224) der Codeschleife einer ersten Empfangskette (200) gleichzeitig auf die Ausgänge des Trägerschleifenkorrektors (316) und des Codeschleifenkorrektors (314) einer zweiten Empfangskette (300) umschalten kann, wenn das von dem Satelliten übertragene Signal (S₁) nicht mehr von der Antenne der ersten Empfangskette (200) empfangen wird, so dass die erste Empfangskette (200) im offenen Kreislauf arbeitet,
- die Vorrichtung ferner Mittel (400) zum Auswählen des vom Messwert (205, 305) des Sendezeitpunkts des empfangenen Signals (S1, S2) durch den Satelliten abgeleiteten Messwertes (T₁) aus denjenigen (205, 305) umfasst, die von jeder im geschlossenen Kreislauf arbeitenden Empfangskette (200, 300) geliefert werden, der das höchste Signal-Rausch-Verhältnis aufweist oder der von der Verarbeitungskette stammt, die die höchste Empfangsantennenverstärkung aufweist.

2. Vorrichtung zum Empfangen von Funknavigationssignalen nach Anspruch 1, **dadurch gekennzeichnet, dass** die Empfangsantennen auf dem Umfang eines Trägers mit einer im Wesentlichen zylindrischen Form positioniert ist.

3. Vorrichtung zum Empfangen von Funknavigationssignalen nach einem der vorherigen Ansprüche, **dadurch gekennzeichnet, dass** der Signalverlust auf einer Antenne aufgrund einer Maskierung des Signals durch den Körper des Trägers in Abhängigkeit von den jeweiligen Positionen des Trägers, der Antennen und der Satelliten vorhergesehen wird.

4. Vorrichtung zum Empfangen von Funknavigationssignalen nach einem der Ansprüche 1 bis 3, die ferner für jede Empfangskette (200, 300) einen Korrektor des Hebelarms (207, 307) umfasst, der darin besteht, jeden Messwert (205, 305) des Sendezeitpunkts des Empfangssignals (S₁, S₂) durch den Satelliten anhand der Lichtwegdifferenz AL_{BL} zwischen der Phasenmitte der Antenne und der Symmetriemitte O der Antennenanordnung zu kompensieren.

5. Vorrichtung zum Empfangen von Funknavigationssignalen nach einem der Ansprüche 1 bis 4, **dadurch gekennzeichnet, dass** jede Empfangskette ferner für die Codeschleife und die Trägerschleife einen Geschwindigkeitskorrektor für den Hebelarm (234, 236, 334, 336) umfasst, der darin besteht, die Ausgänge der Schleifenkorrektoren (214, 216, 314, 316) durch die zeitliche Ableitung der Lichtwegdifferenz AL_{BL} zu kompensieren.

6. Vorrichtung zum Empfangen von Funknavigationssignalen nach Anspruch 4 oder 5, **dadurch gekennzeichnet, dass** die Lichtwegdifferenz AL_{BL} durch Projizieren des Hebelsarms r auf die Sichtlinie (104) zwischen der Symmetriemitte O der Antennenanordnung und dem Satelliten bestimmt wird.

7. Vorrichtung zum Empfangen von Funknavigationssignalen nach Anspruch 6, **dadurch gekennzeichnet, dass** die Koordinaten des Hebelsarms r in einem mit Bezug auf die Erde festen räumlichen Bezugssystem auf der Basis eines Messwertes der Lage des Trägers bestimmt werden.

## Claims

1. Device for receiving radio-navigation signals via satellite comprising a plurality of receiving antennae which form an antenna network, for each antenna and for each satellite in sight of the device, a reception channel (200, 300) comprising demodulation means for the signals (S₁, S₂) received, a code loop and a carrier loop, the demodulation means comprising multiplication means (201, 301) in phase with a local carrier (211, 311), time correlation means (202, 302) with a local code (212, 312) and integration means (203, 303) for the signal which has been correlated in terms of time and phase, the carrier loop comprising a phase discriminator (206, 306), a carrier loop corrector (216, 316) and a numerical control operator NCO (226, 326) which is capable of providing a local carrier phase, the code loop comprising a code discriminator (204, 304), a loop corrector (214, 314) and a numerical control operator NCO (224, 324) which is capable of providing a measurement (205, 305) of the time at which the satellite transmits the signal (S₁, S₂) received,
**characterised in that**:
- each reception channel (200, 300) of the device further comprises interconnection means (208, 308) which are capable of simultaneously tilting the inputs of the numerical control operator NCO (226) of the carrier loop and the numerical control operator NCO (224) of the code loop of a first reception channel (200) towards the outputs of the carrier loop corrector (316) and the code loop corrector (314) of a second reception channel (300) when the signal (S₁) transmitted by the satellite is no longer received by the antenna of the first reception channel (200) so that the first reception channel (200) operates in an open loop,
- the device further comprises means (400) for selecting the measurement (T₁), which is derived from the measurement (205, 305) of the time at which the satellite transmits the signal received (S1, S2), from those (205, 305) supplied by each reception channel (200, 300) operating in a closed loop, and which has the highest signal-to-noise ratio or which originates from the processing channel which has the highest reception antenna gain.

2. Device for receiving radio-navigation signals according to claim 1, **characterised in that** the receiving antennas are positioned on the circumference of a substantially cylindrical carrier.

3. Device for receiving radio-navigation signals according to either of the preceding claims, **characterised in that** the loss of signal on an antenna resulting from the masking of the signal by the body of the carrier is anticipated as a function of the respective positions of the carrier, antennas and satellites.

4. Device for receiving radio-navigation signals according to any one of claims 1 to 3, further comprising, for each reception channel (200, 300), a corrector of the lever arm (207, 307) which involves compensating for each measurement (205, 305) of the time at which the satellite transmits the received signal (S₁, S₂) by the difference of the optical path AL_{BL} between the phase centre of the antenna and the centre of symmetry O of the antenna network.

5. Device for receiving radio-navigation signals according to any one of claims 1 to 4, **characterised in that** each reception channel further comprises, for the code loop and the carrier loop, a lever arm speed corrector (234, 236, 334, 336) which involves compensating for the outputs of the loop correctors (214, 216, 314, 316) by the time drift of the difference of the optical path ΔL_{BL}.

6. Device for receiving radio-navigation signals according to either claim 4 or claim 5, **characterised in that** the difference of the optical path ΔL_{BL} is determined by projecting the lever arm r onto the viewing axis (104) between the centre of symmetry O of the antenna network and the satellite.

7. Device for receiving radio-navigation signals according to claim 6, **characterised in that** the coordinates of the lever arm r are determined in a spatial reference system which is fixed relative to the ground, based on a measurement of the attitude of the carrier.
